Europäisches Patentamt

European Patent Office

Office européen des brevets

(11) Numéro de publication : **0 021 259**
**B1**

(12) **FASCICULE DE BREVET EUROPÉEN**

(45) Date de publication du fascicule du brevet :
16.11.83

(51) Int. Cl.³ : **F 16 H 45/02**

(21) Numéro de dépôt : **80103267.3**

(22) Date de dépôt : **12.06.80**

(54) Dispositif de commande de pontage d'un convertisseur de couple hydrodynamique.

(30) Priorité : 13.06.79 FR 7915191
19.03.80 FR 8006167

(43) Date de publication de la demande :
07.01.81 Bulletin 81/01

(45) Mention de la délivrance du brevet :
16.11.83 Bulletin 83/46

(84) Etats contractants désignés :
BE DE GB IT NL SE

(56) Documents cités :
DE B 1 092 777
FR A 2 102 439
FR A 2 102 502
FR A 2 323 065
FR A 2 375 508
FR A 2 380 469
GB A 1 485 085
US A 3 185 273
US A 3 228 503
US A 3 252 352
US A 3 977 502

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Chevalier, Claude**
**Route de Daubrie**
**F-78760 Jouars-Pontchartrain (FR)**
Inventeur : **Bouvet, Jean-Marie**
**133 Rue de Silly**
**F-92100 Boulogne-Billancourt (FR)**
Inventeur : **Parthuisot, Jean-Pierre**
**158-166 Rue du Lieutenant Colonel de Montbrison**
**F-92500 Rueil-Malmaison (FR)**
Inventeur : **Zammarchi, Gino**
**8 Rue des Mûriers**
**F-75020 Paris (FR)**

(74) Mandataire : **Casalonga, Alain et al**
**BUREAU D.A. CASALONGA OFFICE JOSSE & PETIT**
**Baaderstrasse 12-14**
**D-8000 München 5 (DE)**

Jouve, 18, rue St-Denis, 75001 Paris, France

# Dispositif de commande de pontage d'un convertisseur de couple hydrodynamique

La présente invention est relative à un dispositif de commande de pontage permettant le couplage sans glissement entre l'arbre d'entrée et l'arbre de sortie d'un convertisseur de couple hydrodynamique et en particulier d'un tel convertisseur utilisé dans une transmission automatique à plusieurs rapports de transmission à passage sous couple pour un véhicule automobile.

Les transmissions automatiques utilisées dans de tels véhicules automobiles comprennent un convertisseur hydrocinétique de couple placé entre le moteur d'entraînement du véhicule et la boîte de vitesses. Le convertisseur de couple multiplie le couple d'entrée fourni par le moteur d'entraînement par un certain coefficient pendant une phase transitoire dite phase de conversion de couple. A partir d'une certaine valeur de la vitesse de rotation de l'arbre de sortie du convertisseur, la phase de conversion de couple se trouve terminée et l'on atteint une phase de couplage pendant laquelle il subsiste cependant entre les éléments tournants d'entrée et de sortie du convertisseur un certain glissement qui diminue le rendement global du groupe motopropulseur et augmente de ce fait sa consommation en carburant. On a donc songé, afin de réduire cette consommation dans le cas d'un véhicule équipé d'une telle transmission automatique à convertisseur de couple, à solidariser les organes d'entrée et de sortie dès la fin de la phase de conversion de façon à supprimer le glissement. Cette opération est dite « pontage » entre l'arbre de sortie et l'arbre d'entrée du convertisseur de couple.

On a déjà décrit (US-A 3.185.273, FR-A 2.380.469 et FR-A 2.102.502) des dispositifs de commande de pontage dans lesquels la commande se fait en modifiant le sens de circulation du fluide hydraulique.

D'autres dispositifs connus de commande de pontage de convertisseur de couple font partie intégrante du dispositif hydraulique de puissance de la transmission. Les éléments de commande disposés en amont du convertisseur provoquent, quel que soit l'état du dispositif de commande et le régime de travail du convertisseur, une alimentation ou gavage constant en fluide hydraulique de l'enceinte du convertisseur. Il s'ensuit un débit important en fluide hydraulique qui entraîne des pertes de charge et une diminution de rendement qui ne permet pas d'obtenir l'intégralité de l'économie d'énergie escomptée.

Par ailleurs, dans les dispositifs de commande de ce type, intégrés à l'alimentation hydraulique générale de la transmission, les différents réglages du système de commande de pontage sont difficiles à réaliser et risquent d'entraîner des modifications correspondantes du fonctionnement général de la transmission.

La présente invention a pour objet un dispositif de commande de pontage qui permette de réduire au maximum la consommation d'énergie et qui soit tel que le débit du fluide hydraulique alimentant l'enceinte du convertisseur soit adapté au débit nécessaire à chaque phase de fonctionnement du convertisseur. En particulier le dispositif de commande de l'invention permet l'obtention d'un débit d'alimentation important de l'enceinte du convertisseur en phase de conversion, c'est-à-dire au moment où, compte tenu du glissement des différents éléments du convertisseur, il est nécessaire de disposer de moyens importants d'élimination des calories tandis qu'en phase de pontage sans glissement, le dispositif de commande de l'invention assure la fourniture d'un débit d'alimentation de l'enceinte du convertisseur nettement plus faible puisqu'il n'est pratiquement plus nécessaire d'éliminer de calories.

L'invention a également pour objet un dispositif de commande de pontage qui soit indépendant du dispositif hydraulique d'alimentation générale de la transmission et qui puisse donc être aisément mis au point et réglé indépendamment de l'ensemble de l'alimentation hydraulique.

Par ailleurs, l'invention a également pour objet un dispositif de commande de pontage dont la structure permette un logement intégré à l'intérieur même du convertisseur de façon à réduire l'encombrement de ce dernier tout en obtenant de manière simple les différentes fonctions de commande désirées.

Enfin, par opposition aux différents dispositifs de commande de pontage de type connu, l'invention a pour objet un dispositif de commande qui reçoive des informations concernant le fonctionnement de la transmission et du véhicule équipé de ladite transmission après traitement par un dispositif électronique de façon à permettre un pontage sur chacun des rapports de transmission tout en évitant le pontage au moment du passage des différents rapports et en tenant compte du fonctionnement réel du convertisseur.

Le dispositif de commande de pontage de l'invention permettant le couplage sans glissement entre l'arbre d'entrée et l'arbre de sortie d'un convertisseur de couple hydrodynamique comportant un embrayage muni d'un piston de commande, comprend une vanne hydraulique disposée dans le circuit d'alimentation du convertisseur en fluide hydraulique à pression constante et débit unidirectionnel et pilotée par la pression régnant à l'intérieur du convertisseur de façon à alimenter sélectivement une chambre de desserrage du piston de commande ou, dans une variante, l'enceinte du convertisseur.

Dans un mode de réalisation préféré, le piston de commande solidaire en rotation de l'arbre d'entrée est disposé dans l'enceinte du convertisseur et constitue une paroi mobile de la chambre de desserrage. Une portion de serrage du piston de commande joue le rôle d'embrayage permettant de solidariser l'arbre d'entrée et l'arbre de sortie, de préférence par l'intermédiaire d'un dispositif amortisseur des vibrations de torsion.

Dans ce but, la portion de serrage est de préférence munie d'une garniture de friction jouant également le rôle d'un joint d'étanchéité pour la chambre de desserrage.

Dans une première variante, la vanne hydraulique comprend un élément mobile soumis à l'action d'un ressort de rappel et à la pression différentielle entre l'alimentation en fluide hydraulique qui se fait à pression constante et l'enceinte du convertisseur. Le déplacement de l'élément mobile permet le passage du fluide hydraulique d'alimentation vers la chambre de desserrage du piston de commande en dégageant un orifice calibré précédemment obturé par l'élément mobile.

La vanne hydraulique comprend en outre des moyens autorisant le passage du fluide hydraulique d'alimentation vers l'enceinte du convertisseur dans toutes les positions de l'élément mobile. Dans un mode de réalisation préféré, ces moyens de passage du fluide hydraulique d'alimentation vers l'enceinte du convertisseur sont constitués par une restriction pratiquée dans l'élément mobile lui-même. De cette manière lorsque l'orifice calibré communiquant avec la chambre de desserrage du piston de commande est obturé par l'élément mobile, la totalité du débit de fluide hydraulique d'alimentation pénètre dans l'enceinte du convertisseur par la restriction de la vanne hydraulique. Il en résulte un niveau de pression faible dans l'enceinte du convertisseur. L'équilibre statique de l'élément mobile est tel qu'il obture l'orifice de passage vers la chambre de desserrage le piston de commande assurant le pontage au moyen de sa portion jouant le rôle d'embrayage. Le convertisseur se trouve en phase de pontage. Lorsque le niveau de pression dans l'enceinte du convertisseur passe à une valeur basse, l'élément mobile se déplace, dégageant l'orifice calibré faisant communiquer l'alimentation en fluide hydraulique avec la chambre de desserrage. Le piston de commande se déplace, désolidarisant ainsi l'arbre d'entrée et l'arbre de sortie du convertisseur qui se trouve en phase de conversion. Le débit du fluide hydraulique dans l'enceinte du convertisseur est important ce qui permet l'élimination des calories apparaissant en raison du glissement des différents éléments du convertisseur les uns par rapport aux autres.

Dans une deuxième variante, la vanne hydraulique comprend un élément mobile soumis à un ressort de rappel et à la pression différentielle entre l'alimentation en fluide hydraulique qui se fait à pression constante et la chambre de desserrage. Le déplacement de l'élément mobile permet le passage du fluide hydraulique d'alimentation vers l'enceinte du convertisseur à travers un conduit de passage. La vanne hydraulique comprend en outre une restriction autorisant le passage du fluide hydraulique d'alimentation vers la chambre de desserrage quelle que soit la position de l'élément mobile.

L'élément mobile est de préférence constitué par un tiroir se déplaçant dans un logement et susceptible de masquer ou de dégager le conduit de passage vers l'enceinte du convertisseur. La face amont du tiroir est soumise à la pression constante du fluide hydraulique d'alimentation tandis que la face aval est soumise d'une part à la pression régnant dans la chambre de desserrage et d'autre part à l'action du ressort de rappel de compression.

Dans tous les cas, la vanne hydraulique est de préférence logée à l'extrémité du moyeu du convertisseur, l'alimentation en fluide hydraulique à pression constante se faisant par un arbre de transmission central. Grâce à cette position particulière du dispositif de commande de l'invention, on limite considérablement les pertes de charges en particulier dans le cas d'une configuration de transmission en boîte pont.

Le dispositif de commande de l'invention comprend en outre un traducteur électrohydraulique pouvant se présenter par exemple sous la forme d'une électrovanne, placé dans le circuit hydraulique en aval du convertisseur.

Dans une variante, une restriction est montée en parallèle dudit traducteur. L'ouverture sélective de l'électrovanne provoque une chute de pression dans l'enceinte du convertisseur qui entraîne le déplacement de l'élément mobile de la vanne hydraulique et la commande du pontage. Pour obtenir une sécurité totale de fonctionnement, le traducteur électrohydraulique est monté de façon qu'en l'absence de signal de commande, en particulier en cas de défaillance, il se place dans la position où l'électrovanne est ouverte, le convertisseur se trouvant alors en phase de conversion.

Dans une autre variante, le traducteur électrohydraulique est constitué par une électrovanne à trois voies et deux positions montée de façon à fermer dans une première position le circuit de l'enceinte du convertisseur et à fermer dans une deuxième position le circuit de la chambre de desserrage. Une restriction est avantageusement montée dans le circuit entre l'enceinte du convertisseur et l'électrovanne. De cette manière, lorsque l'électrovanne occupe la deuxième position dans laquelle le circuit de la chambre de desserrage est fermé, la pression qui s'établit dans l'enceinte du convertisseur entre la première restriction de la vanne hydraulique de commande et cette deuxième restriction, est une pression intermédiaire inférieure à la pression d'alimentation du fluide hydraulique et qui règne également dans la chambre de desserrage.

Dans une autre variante de réalisation, le traducteur électrohydraulique est constitué par un simple clapet d'obturation, une deuxième restriction étant disposée dans un conduit secondaire de retour au réservoir de fluide. Dans cette variante, l'enceinte du convertisseur ne comporte pas d'orifice de sortie et c'est la chambre de desserrage qui est reliée au réservoir de fluide hydraulique par l'intermédiaire du clapet d'obturation de l'électrovanne et de la deuxième restriction.

Dans une application préférée, le dispositif de commande de pontage de l'invention comprend en combinaison un dispositif électronique recevant des signaux correspondant respectivement à la vitesse de rotation de l'arbre d'entrée et de l'arbre de sortie du convertisseur de façon à commander le traducteur électrohydraulique dès que le rapport de ces vitesses atteint une valeur prédéterminée correspondant au point de couplage théorique du convertisseur.

Le dispositif électronique comprend de préférence un circuit de temporisation recevant des signaux de passage des rapports de vitesses de la transmission permettant d'interrompre le pontage à chaque passage de vitesse par action correspondante sur le traducteur électrohydraulique.

L'invention sera mieux comprise à l'étude de la description détaillée d'un mode de réalisation pris à titre d'exemple nullement limitatif et illustrée par les dessins annexés, sur lesquels :

la figure 1 est une vue en coupe longitudinale schématique d'un mode de réalisation d'un convertisseur de couple hydrodynamique montrant également sous forme de bloc fonctionnel les éléments essentiels du dispositif de commande électronique ;

la figure 2 est une vue agrandie de détail montrant la structure particulière de la vanne hydraulique de la fig. 1 ;

la figure 3 est une vue en coupe longitudinale schématique d'un deuxième mode de réalisation d'un convertisseur de couple hydrodynamique ; et

la figure 4 est une vue en coupe longitudinale schématique d'une variante du convertisseur de la fig. 3.

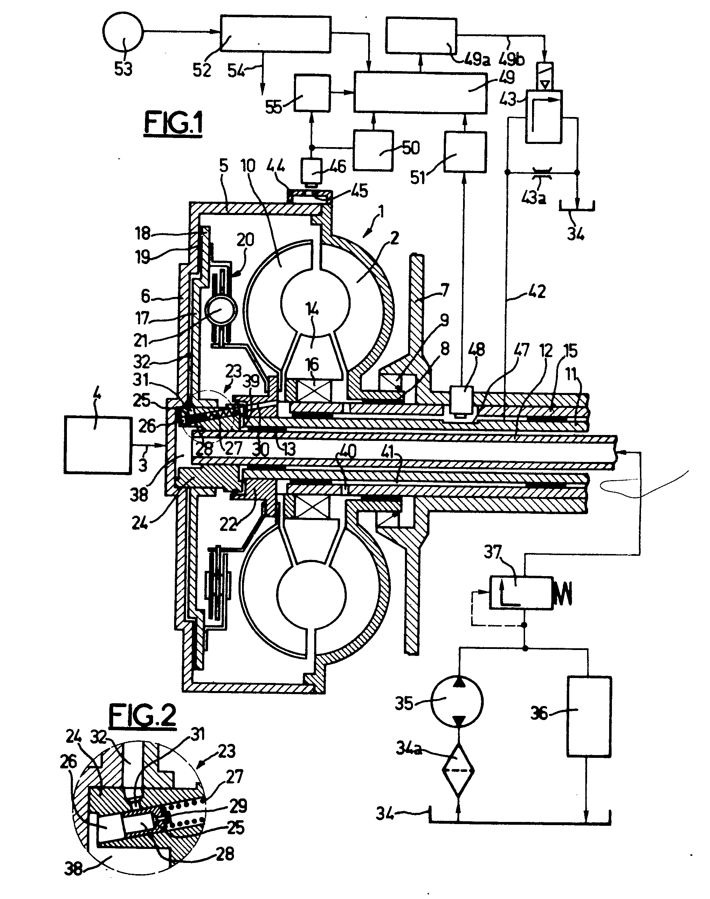

Tel qu'il est représenté sur la fig. 1, le convertisseur 1 comprend un élément d'entrée 2 également appelé pompe ou impulseur, relié mécaniquement à l'arbre d'entrée ou arbre moteur 3 solidaire du moteur d'entraînement 4 par l'intermédiaire d'une cloche cylindrique 5 présentant une paroi sensiblement frontale 6. L'impulseur 2 tourne par rapport au bâti 7 du convertisseur 1 par l'intermédiaire d'un palier à roulements 8 avec interposition d'un joint d'étanchéité 9.

L'élément de sortie 10 du convertisseur 1 ou turbine, est relié à un arbre de sortie 11 qui peut tourner par rapport à un arbre central de transmission 12 par l'intermédiaire du palier à roulement 13. Le convertisseur 1 se complète par le réacteur ou stator 14 intercalé entre l'impulseur 2 et la turbine 10 et qui est monté sur un arbre 15 par l'intermédiaire du dispositif de roue libre 16 qui permet donc dans un sens de rotation de rendre le réacteur 14 solidaire de l'arbre 15 fixé au carter 7.

Un piston de commande 17 se présentant sous la forme d'un flasque sensiblement radial comporte sur sa portion périphérique 18 une garniture de friction 19 qui est susceptible d'entrer en contact avec la face frontale interne correspondante 6 de la cloche 5 de façon à rendre solidaire en rotation ladite cloche 5 et le piston de commande 17. Ce dernier est par ailleurs solidaire de la turbine 10 par l'intermédiaire d'un système amortisseur 20 comportant une pluralité de ressorts hélicoïdaux 21 de façon à assurer un amortissement des vibrations de torsion. Le système amortisseur 20 fixé directement à la périphérie du piston de commande 17 est rendu solidaire du moyeu de la turbine 10 par l'intermédiaire de la douille 22 solidaire de l'arbre de sortie 11.

On notera que le piston de commande 17 et le système d'amortissement 20 se trouvent donc logés à l'intérieur même de l'enceinte du convertisseur 1 et baignent en permanence dans le fluide hydraulique. Le serrage ou le desserrage de l'embrayage constitué par la garniture 19 et le piston de commande 17 s'effectuent donc par application du piston de commande contre la surface frontale 6 de la cloche 5 du convertisseur faisant partie intégrante de l'impulseur d'entrée 10.

Une vanne hydraulique référencée 23 dans son ensemble et visible plus particulièrement sur la fig. 2 est disposée dans le moyeu 24 du convertisseur 1 à l'extrémité de l'arbre central de transmission 12 et solidaire de ce dernier. Dans le mode de réalisation illustré, la vanne hydraulique 23 comprend un tiroir cylindrique 25 mobile à l'intérieur d'un logement 26 traversant le moyeu 24. Le tiroir 25 est soumis à l'action d'un ressort de rappel de compression 27 et présente avantageusement une portion évidée en creux 28 du côté de la pression constante d'alimentation du fluide hydraulique à l'opposé de la face d'appui du ressort 27. Un passage traversant 29 de diamètre réduit jouant le rôle d'une restriction et pratiqué dans le tiroir 25 permet le passage du fluide hydraulique à travers le tiroir 25 en direction de l'enceinte du convertisseur 1 par le conduit 30 pratiqué dans la douille 22.

Un orifice de diamètre calibré 31 est en outre pratiqué dans le moyeu 24 servant de corps cylindrique au tiroir 25 et susceptible de mettre en communication le logement traversant 26 et une chambre de desserrage 32 définie par la face interne frontale 6 de la cloche 5 du convertisseur et la face antagoniste correspondante du piston de commande 17.

Le fluide hydraulique destiné à la fois à la lubrification et à l'alimentation du convertisseur 1 est pompé dans un réservoir 34 à travers une crépine 34a par une pompe 35, par exemple une pompe à engrenages à denture intérieure. Le fluide hydraulique ainsi pompé alimente le dispositif hydraulique de commande 36 permettant le passage des différents rapports de la transmission automatique non représentée sur la figure. Le fluide hydraulique alimente également une vanne 37 de limitation et de régulation de pression permettant d'assurer une valeur constante de la pression du fluide alimentant le convertisseur 1. Le fluide est dirigé par un perçage central de l'arbre de transmission 12 jusque dans la chambre 38 définie par le moyeu 24 du convertisseur qui communique avec le logement traversant 26. La pression constante du fluide d'alimentation exerce donc sur le tiroir 25 un effort qui est contrebalancé par un effort s'exerçant en opposition et provenant conjointement de la pression du fluide hydraulique régnant dans l'enceinte du convertisseur 1 et du ressort de rappel de compression 27. En fonction de la différence de pression entre la chambre 38 et la chambre 39 située à la sortie du logement traversant 26 correspondant sensiblement à la pression régnant dans l'enceinte du convertisseur ainsi que de l'effort de compression du ressort 27, le tiroir 25 peut se déplacer de façon soit à obturer l'orifice calibré 31 comme représenté sur les fig. 1 et 2 soit au contraire à dégager cet orifice permettant ainsi le passage du fluide hydraulique dans la chambre de desserrage 32. La pression du fluide hydraulique dans la chambre de desserrage 32 exerce sur la surface du piston de commande 17 un effort tendant à séparer la garniture 19 de son appui solidaire de la cloche 5. Dans la position contraire où l'orifice 31 est obturé, le fluide hydraulique alimenté par l'arbre de transmission 12 est dirigé vers la chambre 39 et l'enceinte du convertisseur 1 à travers la restriction 29 du tiroir 25. Le fluide hydraulique s'échappe de l'enceinte intérieure du convertisseur 1 par les passages 40 pratiqués dans l'arbre 15, l'espace annulaire 41 subsistant entre l'arbre 15 et l'arbre de sortie 11 et la canalisation de sortie 42. Le fluide hydraulique peut alors retourner au réservoir 34 par l'intermédiaire de la restriction 43a montée en parallèle du traducteur électrohydraulique 43 comprenant par exemple une électrovanne. Cette électrovanne, de structure connue peut notamment comprendre une bille en matériau magnétique susceptible de se déplacer entre deux positions afin d'obturer ou de dégager le passage du fluide.

La cloche 5 de l'impulseur d'entrée 2 comporte à sa périphérie une couronne circulaire métallique 44 dans laquelle sont usinées des encoches équidistantes 45. Ces encoches sont détectées par un capteur magnétique 46 réalisé de manière connue en soi. Le capteur 46 délivre donc un signal électrique dont la fréquence est proportionnelle à la vitesse de rotation de l'arbre d'entrée 3 ou vitesse moteur $V_M$. L'arbre de sortie 11 solidaire de la turbine 10 comporte également sur sa périphérie des encoches équidistantes 47 qui peuvent être détectées par un capteur magnétique 48 du même type que le capteur 46. Le capteur 48 peut donc délivrer également un signal électrique dont la fréquence est proportionnelle à la vitesse de rotation de l'arbre de sortie 11 ou vitesse turbine $V_T$. Les signaux fournis par les capteurs 46 et 48 sont introduits dans un dispositif électronique de commande 49 par l'intermédiaire de deux circuits d'interface 50 et 51 assurant en particulier une mise en forme convenable des signaux de fréquence obtenus. Le dispositif électronique 49 émet un signal de pontage transmis au traducteur électrohydraulique 43 par la liaison 49b avec interposition d'un circuit d'interface de sortie 49a comportant notamment les éléments de puissance nécessaire à la commande du traducteur 43.

Le dispositif électronique de commande 49 reçoit en outre le signal de sortie d'un circuit électronique de temporisation 52 relié à un dispositif 53 fournissant les ordres de passage des différents rapports de la transmission et connecté au dispositif de commande hydraulique 36 par la liaison 54. Enfin, le dispositif électronique de commande 49 reçoit également le signal de sortie d'un circuit de sécurité 55 relié au capteur 46.

L'ensemble de ces éléments de commande électronique qui fait l'objet d'une description détaillée dans la demande de brevet européen EP-A 0.021.258 déposée par la demanderesse conjointement à la présente demande et intitulée « Dispositif électronique de commande du pontage d'un convertisseur de couple hydrodynamique » assure la comparaison des vitesses de rotation de l'arbre d'entrée et de l'arbre de sortie du convertisseur 1 de façon à permettre le pontage dès que le rapport de ces vitesses $V_T/V_M$ atteint la valeur correspondant au point de couplage théorique du convertisseur 1, valeur qui en pratique se situe aux alentours de 0,8. Le dispositif électronique de traitement 49 émet un signal de pontage par la liaison 49b en direction du traducteur électrohydraulique 43 dès que cette condition est atteinte pour tous les rapports de la transmission.

Par ailleurs, le dispositif électronique de temporisation 52 permet de supprimer le pontage par action impérative sur le dispositif électronique 49 pendant une durée déterminée au moment de chaque passage d'un rapport de transmission à un autre. Dès que le dispositif de temporisation 52 reçoit un signal de passage de vitesse du dispositif 53, il agit par l'intermédiaire du dispositif électronique 49 pour supprimer le pontage. De plus, l'ordre de passage des vitesses effectif n'est transmis par la liaison 54 qu'après l'expiration d'une durée de temporisation convenable. Il est ainsi possible de placer pendant les passages de vitesses le convertisseur en phase de conversion ce qui n'entraîne aucun choc sur la transmission et le véhicule. Par ailleurs, le circuit de sécurité 55 permet d'éviter tout pontage par l'intermédiaire du dispositif électronique 49 lorsque la vitesse de rotation de l'arbre d'entrée 3 est inférieure à une limite déterminée. Le traducteur électrohydraulique 43 et le signal émis par le dispositif électronique de commande 49 sont tels qu'en cas de défaillance, par exemple de l'alimentation électrique, le traducteur électrohydraulique 43 se place toujours dans la position correspondant à l'absence de pontage, le convertisseur se trouvant en phase de conversion.

Le dispositif de commande de pontage de l'invention fonctionne de la manière suivante :

Lorsque le traducteur électrohydraulique 43 est piloté par le dispositif électronique de commande 49 de façon à laisser passer le fluide hydraulique de la canalisation 42 vers le réservoir 34, il s'établit un débit de fluide important à travers les passages combinés constitués par le traducteur 43 et la restriction 43a montée en parallèle. A ce débit important correspond un niveau de pression faible dans l'enceinte du convertisseur 1 et par voie de conséquence dans la chambre 39. L'équilibre statique du tiroir 25 est tel que la pression différentielle qui s'exerce sur ce tiroir provoque son déplacement et dégage l'orifice calibré 31. Le fluide hydraulique d'alimentation pénètre dans la chambre de desserrage 32 et provoque le désaccouplement de l'embrayage constitué par la garniture 19 du dispositif 17. L'impulseur d'entrée 2 et la turbine 10 sont donc désolidarisés et le convertisseur 1 se trouve en phase de conversion. On notera que dans cette phase de conversion où il est nécessaire d'éliminer une quantité importante de calories, le débit de fluide alimentant le convertisseur est précisément important.

Lorsque le traducteur électrohydraulique 43 est piloté par le dispositif électronique de commande 49 de façon à ne plus laisser passer le fluide hydraulique de la canalisation 42 vers le réservoir 34, le seul passage qui subsiste pour le fluide hydraulique à la sortie du convertisseur est la restriction 43a. Il en résulte un faible débit de fuite dans la canalisation 42. La pression dans l'enceinte fermée du convertisseur 1 atteint un niveau haut. L'équilibre statique du tiroir 25 est alors tel, compte tenu de la pression différentielle qui s'exerce sur ce tiroir, que celui-ci se déplace de façon à obturer l'orifice calibré 31 comme représenté sur les fig. 1 et 2. La pression statique élevée régnant dans l'enceinte du convertisseur 1 ainsi que la pression cinétique due à l'effet de la force centrifuge sur le fluide se trouvant à l'intérieur du convertisseur agissent sur le piston de commande 17 de façon à exercer un effet de serrage entre la garniture 19 et la paroi correspondante 6 de la cloche 5. L'impulseur d'entrée 2 et la turbine de sortie 10 se trouvent ainsi solidarisés par l'intermédiaire du système d'amortissement 20. Le glissement entre l'organe d'entrée et l'organe de sortie du convertisseur est supprimée et le convertisseur se trouve en phase de pontage.

On notera que dans cette phase de pontage où il n'est plus nécessaire d'éliminer une quantité importante de calories compte tenu de l'absence de glissement, le débit du fluide hydraulique traversant le convertisseur est faible.

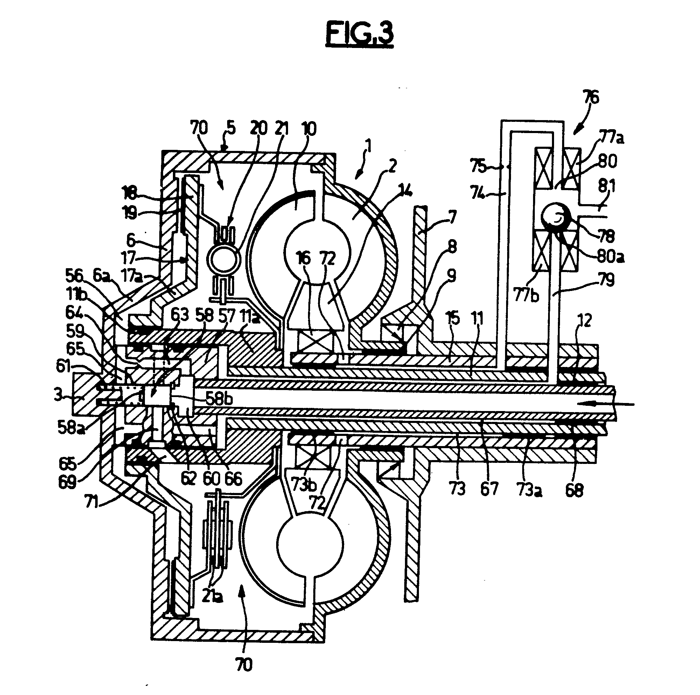

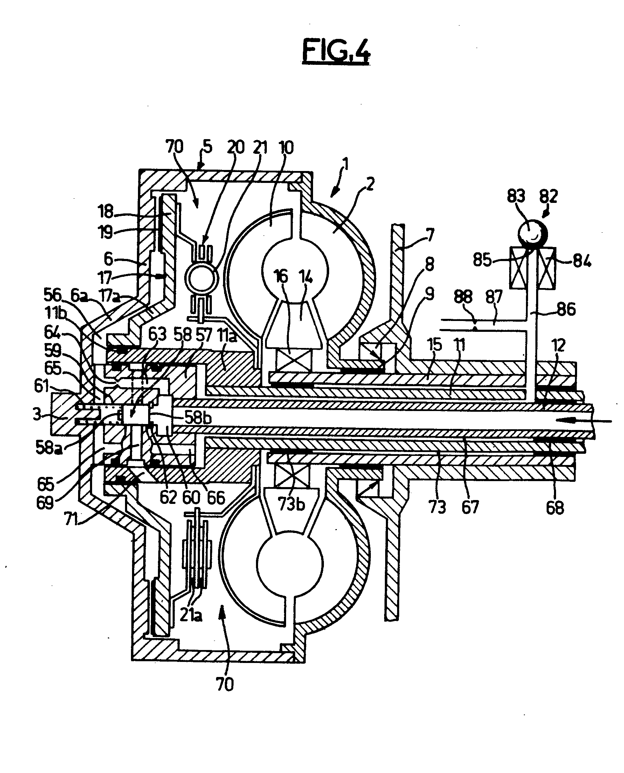

Les fig. 3 et 4 où les éléments analogues portent les mêmes références montrent deux variantes de réalisation.

Tel qu'il est représenté sur la fig. 3, le convertisseur 1 comprend un élément d'entrée 2 également appelé pompe ou impulseur, relié mécaniquement à l'arbre d'entrée ou arbre moteur 3 solidaire du moteur d'entraînement non représenté sur la figure par l'intermédiaire d'une cloche cylindrique 5 présentant une paroi sensiblement frontale 6 munie d'un décrochement conique 6a. L'impulseur 2 tourne par rapport au bâti 7 du convertisseur 1 avec interposition d'un joint d'étanchéité 8 et d'une bague 9.

L'élément de sortie 10 du convertisseur 1 également appelé turbine est relié à un arbre de sortie 11 par l'intermédiaire du moyeu de turbine 11a. L'arbre de sortie 11 peut tourner par rapport à un arbre central de transmission 12. Le convertisseur 1 se complète par le réacteur ou stator 14 intercalé entre l'impulseur 2 et la turbine 10 et qui est monté sur un arbre 15 par l'intermédiaire du dispositif de roue libre 16 qui permet donc dans un sens de rotation de rendre le réacteur 14 solidaire de l'arbre 15 fixé au carter 7.

Un piston de commande 17 se présentant sous la forme d'un flasque sensiblement radial muni d'une portion conique 17a, comporte sur sa portion périphérique 18 une garniture de friction 19 qui est susceptible d'entrer en contact avec la face frontale interne correspondante 6 de la cloche 5 de façon à rendre solidaire en rotation ladite cloche 5 et le piston de commande 17. Ce dernier est par ailleurs solidaire de la turbine 10 par l'intermédiaire d'un système amortisseur 20 comportant une pluralité de ressorts hélicoïdaux 21 et de rondelles de friction 21a de façon à assurer un amortissement des vibrations de torsion. Le système amortisseur 20 est fixé directement à la périphérie du piston de commande 17 et est rendu solidaire du moyeu 11a de la turbine 10. Le piston de commande 17 est susceptible de se déplacer en translation axiale à l'intérieur de la cloche 5 du convertisseur, l'étanchéité étant assurée par contact entre son alésage et un joint 11b monté dans une gorge annulaire du moyeu 11a de la turbine.

Une chambre de desserrage 56 se trouve définie entre la paroi frontale 6 et la face en regard du piston de commande 17 qui constitue une paroi mobile de la chambre de desserrage 56.

A l'intérieur du moyeu 57 du convertisseur solidaire de l'extrémité de l'arbre central de transmission 12 se trouve disposée une vanne hydraulique comprenant un tiroir cylindrique 58 mobile à l'intérieur d'un logement 59 débouchant dans une chambre de distribution 60 qui communique avec l'extrémité de l'arbre creux 12. Le tiroir 58 est soumis à l'action d'un ressort de rappel de compression 61, le déplacement axial du tiroir 58 sous l'action du ressort 61 étant limité par une bague d'arrêt 62.

La vanne hydraulique du moyeu 57 comporte en outre un passage 63 sensiblement axial muni d'une restriction 64 faisant communiquer la chambre de distribution 60 avec la chambre de desserrage 56 par l'intermédiaire d'un passage sensiblement radial 65. Le passage 65 traverse le logement 59 du tiroir 58 et communique par ailleurs avec un passage sensiblement axial 66 relié à l'espace annulaire 67 subsistant entre l'arbre de transmission 12 et l'arbre de sortie 11, l'étanchéité de l'espace annulaire 67 étant assurée par la bague d'étanchéité 68.

Par ailleurs, la vanne hydraulique du moyeu 57 comprend en outre des passages 69 sensiblement radiaux pouvant faire communiquer l'enceinte 70 du convertisseur par l'intermédiaire d'un passage 71 pratiqué dans le moyeu 11a de la turbine avec le logement 59 et la chambre de distribution 60 lorsque le tiroir mobile 58 est déplacé à l'encontre de la force de compression du ressort 61.

La sortie du fluide hydraulique de l'enceinte 70 du convertisseur se fait par les orifices de sortie 72 communiquant avec l'espace annulaire 73 subsistant entre l'arbre fixe 15 et l'arbre de sortie 11 et dont l'étanchéité est assurée par les bagues 73a et 73b.

L'espace annulaire 73 est relié à une canalisation 74 comportant une restriction 75 et aboutissant à l'un des orifices 80 d'une électrovanne de commande 76 à trois voies et deux positions qui dans l'exemple illustré comporte deux électroaimants 77a, 77b et une bille d'obturation 78.

L'espace annulaire 67 relié à la chambre de desserrage 56 communique également avec une canalisation 79 aboutissant au deuxième orifice 80a de l'électrovanne 76 qui est par ailleurs reliée par une canalisation de sortie 81 au réservoir de fluide hydraulique à la pression nulle.

On comprendra bien entendu que l'électrovanne 76 pourrait être remplacée par un dispositif de commande de pontage équivalent comportant par exemple un tiroir de distribution commandé par un électro-aimant.

Dans le mode de réalisation illustré, l'électrovanne 76 est montée de façon à ouvrir l'orifice 80 de sortie de la canalisation 74 lorsqu'elle reçoit un signal électrique tout en fermant l'orifice 80a de la canalisation 79.

Le fonctionnement du convertisseur et de son dispositif de commande de pontage est le suivant. L'alimentation du convertisseur en fluide hydraulique se fait à pression constante et débit unidirectionnel par l'arbre de transmission creux 12 et la chambre de distribution 60. Lorsque l'électrovanne 76 de commande de pontage se trouve dans l'état représenté sur la figure, la bille d'obturation 78 obturant l'orifice 80a de la canalisation 79, aucun débit ne s'établit dans l'espace annulaire 67. Le fluide hydraulique provenant de la chambre de distribution 60 passe par le conduit 63, la restriction 64 et le passage 65, alimentant donc la chambre de desserrage 56. Le fluide passe ensuite dans l'enceinte 70 du convertisseur qui communique avec la chambre de desserrage 56 par l'intervalle existant entre la face frontale 6 de la cloche 5 et la garniture 19 de l'extrémité périphérique 18 du piston de commande 17. On notera que le fluide hydraulique passe également entre la périphérie du piston de commande 17 et la surface cylindrique interne de la cloche 5 ou un intervalle approprié reste ménagé. Le fluide hydraulique retourne au réservoir qui est à la pression nulle par les orifices de sortie 72, l'espace annulaire 73, la canalisation 74 et la restriction 75 en traversant l'orifice 80 de l'électrovanne 76 qui est alors ouvert par la bille d'obturation 78. Il s'établit dans l'enceinte 70 du convertisseur, entre les orifices calibrés jouant le rôle de restrictions 64 et 75 du circuit hydraulique, une pression $P_1$ déterminée par les sections de passage de ces orifices calibrés et inférieure à la pression d'alimentation P. Cette pression intermédiaire $P_1$ règne également dans la chambre de desserrage 56 et dans le logement 59. Elle s'exerce donc sur la face aval 58a du tiroir mobile 58 et s'ajoute à l'action du ressort de compression 61. L'action de la pression $P_1$ et du ressort 61 est telle que le tiroir 58 est maintenu en butée sur la bague d'arrêt 62 malgré l'action de la pression d'alimentation P sur la face amont 58b du tiroir 58 du côté de la chambre de distribution 60. Dans cette position, le tiroir 58 obture les passages 69 empêchant toute alimentation de l'enceinte 70 du convertisseur par ces passages. L'enceinte 70 du convertisseur ne se trouve donc alimentée que par la chambre de desserrage 56. Le piston de commande 17 est donc maintenu éloigné de la face frontale 6 de la coquille 5. L'ensemble fonctionne en convertisseur de couple.

Lorsque l'électrovanne 76 est commandée de façon que la bille d'obturation 78 se place dans la position inverse, obturant l'orifice 80 et dégageant l'orifice 80a, le fluide hydraulique provenant de la chambre de desserrage 56 peut retourner à la réserve de fluide hydraulique par les passages 65 et 66 du moyeu 57, l'espace annulaire 67 et la canalisation 79 reliée à l'électrovanne 76 et dégagée par la bille 78. La pression dans la chambre de desserrage 56 chute donc. Le tiroir mobile 58 n'est plus soumis sur sa face aval qu'à l'action du ressort de compression 61. La pression d'alimentation toujours égale à la pression P grâce à l'existence de l'orifice calibré 64 qui limite le débit de fuite a donc une action prépondérante sur la face amont 58b du tiroir mobile 58 du côté de la chambre de distribution 60. Le tiroir mobile 58 est donc poussé en butée du côté de la face frontale 6 de la coquille 5 en comprimant le ressort 61 et en dégageant les orifices des passages 69. L'enceinte 70 du convertisseur est alors alimentée par les passages 69 et 71. La chambre de desserrage 56 étant à pression nulle, la pression d'alimentation P régnant dans l'enceinte 70 agit sur le piston de commande 17 lequel se déplace jusqu'à ce que la garniture 19 vienne en contact de friction avec la face frontale 6 de la coquille 5. Un effet d'embrayage est réalisé grâce à l'existence de cette garniture 19 qui est en outre de préférence réalisée de façon à assurer en même temps une étanchéité par contact. La pression du fluide hydraulique régnant dans l'enceinte 70 du convertisseur est telle que l'effort transmis au piston de commande 17 est capable d'assurer la transmission du couple à l'arbre de sortie 11 au travers du piston 17 et du système amortisseur 20 des vibrations de torsion. Le glissement entre l'impulseur 2 et la turbine 10 est supprimé. Le pontage du convertisseur est réalisé. On notera que dans cette configuration le débit du fluide hydraulique de retour au réservoir est limité par l'orifice calibré 64. Ce retour de fluide se fait par les passages 65, la structure du tiroir 58 et de son logement 59 étant telle que la communication reste établie entre le passage 63 muni de la restriction 64 et le passage 66 par l'intermédiaire des passages 65.

On voit que la commande de pontage peut être aisément réalisée par la combinaison du tiroir mobile 58 et de la restriction 64. Le tiroir 58 ouvre ou ferme le circuit d'alimentation constitué par les passages 69 communiquant avec l'enceinte 70 du convertisseur. Par ailleurs, la restriction 64 permet en phase de pontage l'établissement de la pression du fluide hydraulique dans l'enceinte 70 et l'obtention dans la chambre de desserrage 56 d'une pression inférieure à celle qui règle dans l'enceinte 70 du convertisseur autorisant ainsi la transmission directe du couple sans glissement.

Le mode de réalisation illustré sur la fig. 4 où les pièces analogues portent les mêmes références diffère uniquement du mode de réalisation de la fig. 3 par le fait que l'enceinte 70 du convertisseur est ici fermée par construction, le retour du fluide hydraulique au réservoir se faisant par la chambre de desserrage 56.

Par ailleurs, dans ce mode de réalisation, l'électrovanne 82 est constituée par un simple clapet d'obturation comprenant une bille 83 et un électro-aimant 84. La bille 83 est susceptible d'obturer un orifice de sortie 85 d'une canalisation 86 reliée à l'espace annulaire 67 communiquant par les passages 66 et 65 avec la chambre de desserrage 56 comme on l'a vu précédemment pour le mode de réalisation de la fig. 1. Un conduit secondaire de retour 87 est également relié à la canalisation 86 et comporte une restriction 88 qui est donc montée en parallèle par rapport à l'électrovanne 82. le conduit secondaire de retour 87 est relié au réservoir de fluide hydraulique à la pression nulle.

Le fonctionnement de ce mode de réalisation est le suivant. L'alimentation du convertisseur en fluide hydraulique se fait comme précédemment à pression constante et débit unidirectionnel par l'arbre de transmission 12 et la chambre de distribution 60. Lorsque l'électrovanne 82 de commande de pontage est dans l'état représenté sur la fig. 2, la bille 83 obturant la sortie 85 de la canalisation 86, le retour du fluide hydraulique au réservoir se fait uniquement par le conduit secondaire de retour 87 et la restriction 88. le fluide hydraulique provenant de la chambre de distribution 60 traverse le passage 63 et la restriction 64 avant de pénétrer dans la chambre de desserrage 56 par les passages 65. Le retour au réservoir de fluide hydraulique se fait par le passage 65 en traversant le logement 59 puis par le passage 66 et l'espace annulaire 67 relié comme il vient d'être dit à la canalisation 86 et au conduit secondaire de sortie 87. Il s'établit entre les orifices calibrés jouant le rôle de restrictions 64 et 88 une pression $P_1$ déterminée par les sections de passage de ces orifices calibrés et inférieure à la pression d'alimentation P. Comme précédemment cette pression intermédiaire $P_1$ régnant dans le logement 59 s'ajoute à l'action du ressort de compression 61 et maintient le tiroir 58 en butée sur la bague d'arrêt 62. Le tiroir 58 obture donc les passages 69 empêchant toute alimentation directe de l'enceinte 70 du convertisseur. L'enceinte 70 du convertisseur ne se trouve donc alimentée que par les passages 65 et la chambre de desserrage 56. Le piston de commande 17 est maintenu éloigné de la face frontale 6 de la cloche 5 du convertisseur qui fonctionne donc en convertisseur de couple.

Lorsque l'électrovanne 82 est en position inverse, la bille 83 ouvrant l'orifice 85 du canal 86, le retour du fluide hydraulique au réservoir se fait à la fois par la canalisation 86 et le conduit secondaire de retour 87 ce qui se traduit par une section de passage du fluide hydraulique plus importante. La pression chute dans la chambre de desserrage 56 et dans le logement 59 qui sont tous les deux reliés à la canalisation 86 par l'espace annulaire 67 et les passages 66. Le tiroir 58 qui n'est plus soumis sur sa face aval 58a qu'à l'action du ressort de compression 61 se déplace sous l'action de la pression d'alimentation P régnant dans la chambre de distribution 60 et dégage les orifices des passages 69. La pression d'alimentation toujours égale à la pression P grâce à la présence de l'orifice calibré 64 jouant le rôle de restriction qui limite le débit de fuite a donc une action prépondérante sur le tiroir 58. L'enceinte 70 du convertisseur se trouve alimentée à la pression P. Compte tenu du fait que la chambre de desserrage 56 est à une pression sensiblement nulle, le piston de commande 17 se trouve déplacé jusqu'à ce que la garniture 19 entre en contact de friction avec la face frontale 6 jouant ainsi un rôle d'embrayage comme dans le mode de réalisation précédent de façon à réaliser le pontage. On notera que dans cette configuration, le débit du fluide hydraulique de retour au réservoir est limité par l'orifice calibré 64.

En définitive, dans le mode de réalisation de la fig. 4, on obtient donc la commande du pontage au moyen de la même combinaison du tiroir mobile 58 et de la restriction 64. Dans ce mode de réalisation cependant, la structure du convertisseur est plus simple et il est possible de supprimer la canalisation de sortie 74 du mode de réalisation de la fig. 3 ainsi que la bague d'étanchéité 73a puisque les espaces annulaires 67 et 73 sont ici tous les deux en communication avec la canalisation de sortie unique 86.

La commande électrique des électrovannes 76 et 82 se fait de préférence comme décrit en référence aux fig. 1 et 2 au moyen d'un dispositif électronique recevant des signaux correspondant respectivement à la vitesse de rotation de l'arbre d'entrée 12 et de l'arbre de sortie 11 de façon à commander le pontage dès que le rapport de ces vitesses atteint une valeur prédéterminée correspondant au couplage théorique du convertisseur. Comme dans le premier mode de réalisation on prévoit en outre de préférence un circuit de temporisation recevant des signaux correspondant au passage des rapports de vitesse de façon à interrompre le pontage à chaque passage de vitesse pendant la durée du passage.

## Revendications

1. Dispositif de commande de pontage permettant le couplage sans glissement entre l'arbre d'entrée (3) et l'arbre de sortie (11) d'un convertisseur de couple hydrodynamique (1) comportant un embrayage muni d'un piston de commande (17), caractérisé par le fait qu'il comprend une vanne hydraulique (23, 58) disposée dans le circuit d'alimentation du convertisseur en fluide hydraulique à pression constante et débit unidirectionnel et pilotée par la pression régnant à l'intérieur du convertisseur, de façon à alimenter sélectivement une chambre de desserrage (32) du piston de commande (17) ou, dans une variante, l'enceinte du convertisseur.

2. Dispositif de commande de pontage selon la revendication 1, dans lequel le piston de commande (17) solidaire en rotation de l'arbre de sortie (11) est disposé dans l'enceinte du convertisseur et constitue une paroi mobile de ladite chambre de desserrage (32), une portion de serrage dudit piston munie d'une garniture de friction (19), jouant le rôle d'embrayage et permettant de solidariser l'arbre d'entrée (3) et l'arbre de sortie (11) par l'intermédiaire d'un dispositif amortisseur (20) des vibrations de torsion, caractérisé par le fait que la garniture de friction (19) de ladite portion de serrage est adaptée pour jouer également le rôle de joint d'étanchéité pour la chambre de desserrage (32).

3. Dispositif de commande de pontage selon l'une quelconque des revendications précédentes, dans lequel la vanne hydraulique comprend un élément mobile soumis à un ressort de rappel, caractérisé par le fait que l'élément mobile (25) de la vanne hydraulique (23) est soumis à la pression différentielle entre l'alimentation en fluide hydraulique et l'enceinte du convertisseur, le déplacement de l'élément mobile (25) permettant le passage du fluide hydraulique d'alimentation vers la chambre de desserrage (32) du piston de commande (17) à travers un orifice (31).

4. Dispositif de commande de pontage selon la revendication 3, caractérisé par le fait que la vanne hydraulique (23) comprend en outre des moyens (29) autorisant le passage du fluide hydraulique d'alimentation vers l'enceinte du convertisseur quelle que soit la position de l'élément mobile (25).

5. Dispositif de commande de pontage selon la revendication 4, caractérisé par le fait que lesdits moyens de passage sont constitués par une restriction (29) pratiquée dans l'élément mobile (25) et autorisant le passage du fluide hydraulique d'alimentation vers l'enceinte du convertisseur.

6. Dispositif de commande de pontage selon l'une quelconque des revendications 3 à 5, caractérisé par le fait que l'élément mobile comprend un tiroir (25) se déplaçant dans un logement (26) et susceptible de masquer ou de dégager l'orifice de passage (31) vers la chambre de desserrage (32), la face amont dudit tiroir (25) étant soumise à la pression constante du fluide hydraulique d'alimentation et la face aval étant soumise d'une part à la pression régnant dans l'enceinte du convertisseur et d'autre part à l'action d'un ressort (27) de rappel de compression.

7. Dispositif de commande de pontage, selon les revendications 1 ou 2, dans lequel la vanne hydraulique comprend un élément mobile (58) soumis à un ressort de rappel (61), caractérisé par le fait que l'élément mobile (58) de la vanne hydraulique est soumis à la pression différentielle entre l'alimentation en fluide hydraulique et celle régnant dans la chambre de desserrage (56), le déplacement de l'élément mobile permettant le passage du fluide hydraulique d'alimentation vers l'enceinte du convertisseur à travers un conduit (69).

8. Dispositif de commande de pontage selon la revendication 7, caractérisé par le fait que le circuit d'alimentation comprend une restriction (64) autorisant le passage du fluide hydraulique d'alimentation vers la chambre de desserrage (56) quelle que soit la position de l'élément mobile (58).

9. Dispositif de commande de pontage selon les revendications 7 ou 8, dans lequel l'élément mobile comprend un tiroir (58) se déplaçant dans un logement (59) et susceptible de masquer ou de dégager un orifice de passage (69) vers l'enceinte du convertisseur, caractérisé par le fait que la face amont (58b) du tiroir (58) reste toujours soumise à la pression constante du fluide hydraulique d'alimentation et la face aval (58a) est soumise d'une part à la pression régnant dans la chambre de desserrage (56) et d'autre part à l'action du ressort de rappel de compression (61).

10. Dispositif de commande de pontage selon l'une quelconque des revendications précédentes, caractérisé par le fait que la vanne hydraulique est logée à l'extrémité du moyeu du convertisseur, l'alimentation en fluide hydraulique à pression constante se faisant par un arbre creux de transmission central.

11. Dispositif de commande de pontage selon l'une quelconque des revendications précédentes, caractérisé par le fait qu'il comprend en outre un traducteur électrohydraulique (43) placé dans le circuit hydraulique en aval du convertisseur, une restriction (43a) étant montée en parallèle, l'ouverture du traducteur électrohydraulique provoquant la chute de pression dans l'enceinte du convertisseur.

12. Dispositif de commande de pontage selon la revendication 11, caractérisé par le fait que le traducteur électrohydraulique (43) est adapté pour se placer dans la position ouverte en l'absence de signal de commande.

13. Dispositif de commande de pontage selon l'une quelconque des revendications 1 à 10, caractérisé par le fait qu'il comprend en outre un traducteur électrohydraulique constitué par une électrovanne (76) à trois voies et deux positions montée de façon à fermer dans une première position le circuit de l'enceinte du convertisseur et à fermer dans une deuxième position le circuit de la chambre de desserrage (56).

14. Dispositif de commande selon la revendication 13, caractérisé par le fait qu'une restriction (75) est montée dans le circuit entre l'enceinte (70) du convertisseur et l'électrovanne (76).

15. Dispositif de commande de pontage selon l'une quelconque des revendications 1 à 10, caractérisé par le fait qu'il comprend en outre un traducteur électrohydraulique constitué par un simple clapet d'obturation (82) commandé électriquement, une restriction (88) étant disposée dans un conduit secondaire (87) de retour au réservoir de fluide et l'enceinte (70) du convertisseur étant fermée par construction.

16. Dispositif de commande de pontage selon l'une quelconque des revendications 10 à 15, caractérisé par le fait qu'il comprend un dispositif électronique de commande (49) recevant des signaux correspondant respectivement à la vitesse de rotation de l'arbre d'entrée (3) et de l'arbre de sortie (11) du convertisseur de façon à commander le traducteur électrohydraulique dès que le rapport de ces vitesse atteint une valeur prédéterminée.

17. Dispositif de commande de pontage selon la revendication 16, appliqué à la commande de pontage du convertisseur d'une transmission automatique de véhicule automobile à plusieurs rapports de transmission à passage sous couple, caractérisé par le fait qu'il comprend en outre un circuit électronique de temporisation (52) recevant des signaux correspondant aux passages des rapports de vitesse et agissant sur le dispositif électronique de commande (49) pour interrompre le pontage à chaque passage de vitesse.

**Claims**

1. A control device for a lock-up clutch providing for slipless coupling between the input shaft (3) and the output shaft (11) of a hydrodynamic torque converter (1) comprising a clutch fitted with a control piston (17), characterized in that it comprises a hydraulic valve (23, 58) placed in the circuit feeding the converter with hydraulic fluid at constant pressure and with one direction of flow, the valve being controlled by the pressure obtaining inside the converter so as to selectively feed a control piston (17) release chamber (32) or, in a variant, the converter casing.

2. The lock-up clutch control device according to claim 1, wherein the control piston (17), fixed in rotation to the output shaft (11), is placed in the converter casing and forms a movable wall of the said release chamber (32), with a gripping portion of the said piston fitted with a friction lining (19) acting as clutch and making it possible to fix the input shaft (3) and the output shaft (11) together by means of a torsional vibration damping system (20), characterized in that the friction lining (19) of the said gripping portion is designed to also act as seal for the release chamber (32).

3. The lock-up clutch control device according to any of the preceding claims, in which the hydraulic valve comprises a movable element acted on by a return spring, characterized in that the movable element (25) of the hydraulic valve (23) is acted on by the differential pressure between the hydraulic fluid feed and the converter casing, movement of the movable element (25) allowing feed hydraulic fluid to flow through into the control piston (17) release chamber (32) through a port (31).

4. The lock-up clutch control device according to claim 3, characterized in that the hydraulic valve (23) also comprises means (29) allowing feed hydraulic fluid to flow into the converter casing whatever the position of the movable element (25).

5. The lock-up clutch control device according to claim 4, characterized in that the said throughflow means consist of a restrictor (29) made in the movable element (25) which allows feed hydraulic fluid to flow into the converter casing.

6. The lock-up clutch control device according to any of claims 3 to 5, characterized in that the movable element comprises a slide (25) moving inside a housing (26) and capable of blocking off or opening the port (31) leading to the release chamber (32), the upstream face of the said slide (25) being subjected to the constant pressure of the feed hydraulic fluid and the downstream face being subjected both to the pressure obtaining in the converter casing and to the action of a return compression spring (27).

7. The lock-up clutch control device according to claims 1 or 2, wherein the hydraulic valve comprises a movable element (58) acted on by a return spring (61), characterized in that the movable element (58) of the hydraulic valve is subjected to the differential pressure between the feed hydraulic fluid pressure and the pressure obtaining in the release chamber (56), with the movement of the movable element allowing the feed hydraulic fluid to flow into the converter casing through a duct (69).

8. The lock-up clutch control device according to claim 7, characterized in that the feed circuit comprises a restrictor (64) allowing the feed hydraulic fluid to flow into the release chamber (56) whatever the position of the movable element (58).

9. The lock-up clutch control device according to claims 7 or 8, wherein the movable element comprises a slide (58) moving in a housing (59) and capable of blocking off or opening a port (69) leading to the converter casing, characterized in that the upstream face (58b) of the slide (58) is still always acted on by the constant pressure of the feed hydraulic fluid and the downstream face (58a) is subjected to both the pressure obtaining in the release chamber (56) and to the action of the return compression spring (61).

10. The lock-up clutch control device according to any of the preceding claims, characterized in that the hydraulic valve is housed at the end of the converter hub, with the constant pressure hydraulic fluid feed being through a hollow central transmission shaft.

11. The lock-up clutch control device according to any of the preceding claims, characterized in that it also comprises an electrohydraulic transducer (43) placed in the hydraulic circuit downstream of the converter, a restrictor (43a) being installed in parallel, with opening of the electrohydraulic transducer causing a fall in the pressure in the converter casing.

12. The lock-up clutch control device according to claim 11, characterized in that the electrohydraulkc transducer (43) is designed to place itself in the open position if there is no control signal.

13. The lock-up control device according to any of claims 1 to 10, characterized in that it also comprises an electrohydraulic transducer consisting of a three-way two-position electric (solenoid) valve (76) installed in such a way as to close the converter casing circuit in a first position and to close the release chamber (56) circuit in a second position.

14. The control device according to claim 13, characterized in that a restrictor (75) is installed in the circuit between the converter casing (70) and the electric valve (76).

15. The lock-up clutch control device according to any of claims 1 to 10, characterized in that it also comprises an electrohydraulic transducer consisting of a simple electrically-operated check valve (82), a restrictor (88) being placed in a secondary line (87) for returning fluid to the reservoir and the converter casing (70) being closed by its construction.

16. The lock-up clutch control device according to any of claims 10 to 15, characterized in that it comprises an electronic control device (49) receiving signals corresponding respectively to the rotational speed of the input shaft (3) and of the output shaft (11) of the converter so as to operate the electrohydraulic transducer as soon as the ratio of these speeds reaches a preset value.

17. The lock-up clutch control device according to claim 16, applied to the lock-up clutch control of the converter of an automotive vehicle automatic transmission having several transmission ratios changed under torque, characterized in that it also comprises an electronic timing circuit (52) receiving signals corresponding to the gear ratio changes and acting on the electronic control device (49) to cancel the lock-up at each speed change.

**Ansprüche**

1. Steuervorrichtung für eine Überbrückungskupplung eines hydrodynamischen Drehmomentwandlers (1), die das schlupffreie Kuppeln zwischen der Antriebswelle (3) und der Abtriebswelle (11) ermöglicht, mit einer Kupplung, die mit einem Steuerkolben (17) ausgerüstet ist, dadurch gekennzeichnet, daß sie ein Hydraulikventil (23, 58) enthält, das in der Versorgungsleitung des Drehmomentwandlers mit Hydraulikflüssigkeit unter konstantem Druck und mit einseitig gerichtetem Durchfluß liegt und von dem im Inneren des Drehmomentwandlers herrschenden Druck gesteuert wird, so daß es selektiv eine Lösekammer (32) des Steuerkolbens (17) oder, in einer variante, das Gehäuse des Drehmomentwandlers versorgt.

2. Steuervorrichtung für eine Überbrückungskupplung gemäß Anspruch 1, in der der drehfest mit der Antriebswelle (11) verbundene Steuerkolben (17) im Gehäuse des Drehmomentwandlers angeordnet ist und eine bewegliche Wand der genannten Lösekammer (32) bildet, wobei ein Klemmteil des genannten Kolbens mit einem Reibbelag (19) versehen ist und die Rolle der Kupplung spielt und es ermöglicht, die Antriebswelle (3) und die Abtriebswelle (11) über eine Torsionsschwingungsdämpfvorrichtung (20) zu kuppeln, dadurch gekennzeichnet, daß der Reibbelag (19) des genannten Klemmteils so ausgelegt ist, daß er auch die Rolle einer Dichtung für die Lösekammer (32) übernimmt.

3. Steuervorrichtung für eine Überbrückungskupplung gemäß einem beliebigen der vorstehenden Ansprüche, in der das Hydraulikventil ein bewegliches Teil enthält, das von einer Rückholfeder beaufschlagt wird, dadurch gekennzeichnet, daß das bewegliche Teil (25) des Hydraulikventils (23) unter dem Differenzdruck zwischen der Hydraulikflüssigkeitsversorgung und dem Drehmomentwandlergehäuse steht, wobei das verschieben des beweglichen Teils (25) den Durchfluss der Hydraulikflüssigkeit aus der versorgungsleitung zur Lösekammer (32) des Steuerkolbens (17) durch eine Öffnung (31) ermöglicht.

4. Steuervorrichtung für eine Überbrückungskupplung gemäß Anspruch 3, dadurch gekennzeichnet, daß das Hydraulikventil (23) ferner Mittel (29) enthält, die den Durchfluß der Hydraulikflüssigkeit aus der versorgungsleitung zum Drehmomentwandlergehäuse unabhängig von der Stellung des beweglichen Teils (25) ermöglicht.

5. Steuervorrichtung für eine Überbrückungskupplung gemäß Anspruch 4, dadurch gekennzeichnet, daß die genannten Durchflußmittel aus einer Drosselung (29) im beweglichen Teil (25) bestehen, die den Durchfluß der Hydraulikflüssigkeit aus der Versorgungsleitung zum Drehmomentwandlergehäuse zuläßt.

6. Steuervorrichtung für eine Überbrückungskupplung gemäß einem beliebigen der Ansprüche 3 bis 5, dadurch gekennzeichnet, daß das bewegliche teil einen Schieber (25) enthält, der sich in einem Sitz (26) bewegt und geeignet ist, die Durchflußöffnung (31) zur Lösekammer (32) abzudecken bzw. freizugeben, wobei die in Strömungsrichtung vordere Fläche des genannten Schiebers (25) unter dem konstanten Druck der Hydraulikflüssigkeit aus der Versorgungsleitung steht und die in Strömungsrichtung hintere Fläche einerseits unter dem im Drehmomentwandlergehäuse herrschenden Druck und andererseits unter dem Druck einer Rückstell-Druckfeder (27) steht.

7. Steuervorrichtung für die Überbrückungskupplung gemäß den Ansprüchen 1 oder 2, in der das Hydraulikventil ein bewegliches Teil (58) enthält, das unter dem Druck einer Rückstellfeder (61) steht, dadurch gekennzeichnet, daß das bewegliche Teil (58) des Hydraulikventils unter dem Differenzdruck zwischen der Hydraulikflüssigkeit der Versorgungsleitung und dem in der Lösekammer (56) herrschenden Druck steht, wobei das Verschieben des beweglichen Teils den Durchgang der Hydraulikflüssigkeit aus der Versorgungsleitung durch eine Leitung (69) zum Drehmomentwandlergehäuse ermöglicht.

8. Steuervorrichtung für die Überbrückungskupplung gemäß Anspruch 7, dadurch gekennzeichnet, daß die Versorgungsleitung eine Drosselung (64) enthält, die den Durchfluß der Hydraulikflüssigkeit aus der Versorgungsleitung zur Lösekammer (56) unabhängig von der Stellung des beweglichen Teils (58) ermöglicht.

9. Steuervorrichtung für eine Überbrückungskupplung gemäß den Ansprüchen 7 oder 8, in dem das bewegliche Teil einen Schieber (58) enthält, der sich in einem Sitz (59) bewegt und geeignet ist, eine Durchflußöffnung (69) zum Drehmomentwandlergehäuse abzudecken bzw. freizugeben, dadurch gekennzeichnet, daß die in Strömungsrichtung vordere Fläche (58b) des Schiebers (58) immer unter dem konstanten Druck der Hydraulikflüssigkeit aus der Versorgungsleitung steht und die in Strömungsrichtung hintere Fläche (58a) einerseits unter dem im Inneren der Lösekammer (56) herrschenden Druck und andererseits unter der Einwirkung der Rückstell-Druckfeder (61) steht.

10. Steuervorrichtung für eine Überbrückungskupplung gemäß einem beliebigen der vorstehenden Ansprüche, dadurch gekennzeichnet, daß das Hydraulikventil am Ende der nabe des Drehmomentwandlers sitzt und die Versorgung mit Hydraulikflüssigkeit unter konstantem Druck durch eine hohle Getriebemittelwelle bewerkstelligt wird.

11. Steuervorrichtung für eine Überbrückungskupplung gemäß einem beliebigen der vorstehenden Ansprüche, dadurch gekennzeichnet, daß sie ferner einen elektrohydraulischen Übertrager (43) enthält, der im Hydraulikkreis in Strömungsrichtung hinter dem Drehmomentwandler liegt, wobei eine Drosselung (43a) parallel dazu angeordnet ist und das Öffnen des elektrohydraulischen Übertragers einen Druckabfall im Drehmomentwandlergehäuse bewirkt.

12. Steuervorrichtung für eine Überbrückungskupplung gemäß Anspruch 11, dadurch gekennzeichnet, daß der elektrohydraulische Übertrager (43) so ausgelegt ist, daß er in die Offenstellung geht, wenn kein Steuersignal anliegt.

13. Steuervorrichtung für eine Überbrückungskupplung gemäß einem beliebigen der Ansprüche 1 bis 10, dadurch gekennzeichnet, daß sie ferner einen elektrohydraulischen Übertrager enthält, der aus einem elektromagnetischen Dreiwegventil (76) mit zwei Stellungen besteht, das so angeordnet ist, daß es in einer ersten Stellung den Weg zum Drehmomentwandlergehäuse und in der zweiten Stellung den Weg zur Lösekammer (56) sperrt.

14. Steuervorrichtung für eine Überbrückungskupplung gemäß Anspruch 13, dadurch gekennzeichnet, daß in der Leitung zwischen dem Drehmomentwandlergehäuse und dem Elektromagnetventil (76) eine Drosselung angebracht ist.

15. Steuervorrichtung für eine Überbrückungskupplung gemäß einem beliebigen der Ansprüche 1 bis 10, dadurch gekennzeichnet, daß sie ferner einen elektrohydraulischen Übertrager enthält, der aus einer einfachen elektrisch gesteuerten Sperrklappe (82) besteht, wobei eine Drosselung (88) in einer zweiten (87) Rückführleitung zum Flüssigkeitstank angeordnet ist und das Drehmomentwandlergehäuse konstruktiv verschlossen ist.

16. Steuervorrichtung für eine Überbrückungskupplung gemäß einem beliebigen der Ansprüche 10 bis 15, dadurch gekennzeichnet, daß sie eine elektronische Steuervorrichtung (49) enthält, die Signale erhält, die der Drehzahl der Antriebswelle (3) bzw. der Abtriebswelle (11) des Drehmomentwandlers entsprechen, so daß der elektrohydraulische Wandler angesteuert wird sobald dieses Drehzahlverhältnis einen vorgegebenen Wert erreicht.

17. Steuervorrichtung für eine Überbrückungskupplung gemäß Anspruch 16, angewandt auf die Steuerung der Überbrückungskupplung des drehmomentwandlers einer automatischen Kupplung eines Kraftwagens mit mehreren Gängen für Übergang unter Drehmoment, dadurch gekennzeichnet, daß sie ferner einen elektronischen Verzögerungsschaltkreis (52) enthält, der die Signale entsprechend den Drehzahlverhältnissen bei den Schaltvorgängen aufnimmt und auf die elektronische Steuervorrichtung (49) einwirkt um die Überbrückung bei jedem Schaltvorgang zu unterbrechen.

FIG.1

FIG.2

## FIG.3

## FIG.4